# EUROPÄISCHE PATENTSCHRIFT

(11) **EP 1 267 558 B1**
(45) Veröffentlichungstag und Bekanntmachung des Hinweises auf die Patenterteilung: **06.05.2015**
(21) Anmeldenummer: 02100666.3
(22) Anmeldetag: 04.06.2002
(51) Int. Cl.: H04M 3/56

(54) **Verfahren und Anordnung zum Aufbau und zur Steuerung des Verbindungsaufbaus einer Konferenzschaltung**
Method and system to establish and control call-setup of a conference call
Procédé et appareil pour établir et contrôler l'initiation de l'appel de conférence

(30) Priorität: 13.06.2001 DE 10128727
(43) Veröffentlichungstag der Anmeldung: 18.12.2002
(73) Patentinhaber: Unify GmbH & Co. KG, 81379 München (DE)
(72) Erfinder: Krenn, Andreas, 1210, Wien (AT)
(74) Vertreter: Fritzsche, Thomas

(56) Entgegenhaltungen:
- EP-A- 0 999 686
- US-A- 5 995 608

## Beschreibung

EP-A-0 999 686 beschreibt ein Verfahren und eine Vorrichtung für eine Fernsprechkonferenz zur Verringerung der Gesamtkosten einer Konferenzverbindung.

Die Erfindung betrifft ein Verfahren zum Aufbau und zur Steuerung einer netzweiten Konferenzschaltung in einem TK-Netz nach dem Oberbegriff des Anspruchs 1 sowie eine zur Durchführung dieses Verfahrens geeignete Anordnung.

Auch in modernen Telekommunikationsnetzen ist der Aufbau einer Konferenzschaltung noch ein relativ aufwendiger und kostspieliger Vorgang - insbesondere dann, wenn die Teilnehmer an verschiedene Vermittlungsstellen eines Netzes oder gar an unterschiedliche Netze angeschlossen sind. Eine Konferenzschaltung kann durch einen Teilnehmer über den Anruf bei einem Call-Center gebucht werden, wo ein Agent dann die benötigte Verbindungsstruktur aufbaut. Hierbei kann - je nach den Vorgaben des buchenden Teilnehmers (Dringlichkeit, tageszeitliche Erreichbarkeit der Teilnehmer, benötigter QoS (Quality of Service)) - durch den Agenten eine Minimierung der Kosten versucht werden. Dies ist aber im Rahmen eines bedienergesteuerten Verbindungsaufbaus nur bedingt möglich. So kann ein Agent, der anhand der Teilnehmerliste der Konferenzschaltung hohe Verbindungskosten bei Aufbau der Konferenzschaltung von seiner eigenen Vermittlungsstelle aus vorhersieht, die Buchung von sich aus an ein Call-Center weiterreichen, welches voraussichtlich die Konferenzschaltung mit geringen Gesamtleitungskosten aufbauen kann, weil es einer günstigeren Vermittlungsstelle zugeordnet ist. Diese Vorgehensweise ist andererseits aber personalaufwendig, da zwei Agenten in verschiedenen Call-Centern involviert sind. Hierdurch steigt wiederum der Gesamtkostenaufwand.

Vergleichbare Probleme treten auf, wenn der Aufbau einer Konferenzschaltung von einem Datenendgerät aus über ein IP-Netz, speziell das Internet, initialisiert wird. Auch hier läßt sich vorab kaum ein optimaler Startpunkt für den Aufbau der Konferenzschaltung festlegen.

Der Erfindung liegt daher die Aufgabe zugrunde, ein verbessertes Verfahren der gattungsgemäßen Art sowie eine zur Durchführung dieses Verfahrens geeignete Anordnung anzugeben, welche einen hinsichtlich der beanspruchten Leitungskapazität und/oder entstehenden Kosten optimierten Aufbau einer Konferenzschaltung zwischen Teilnehmern verschiedener Vermittlungsstellen erlauben.

Diese Aufgabe wird in ihrem Verfahrensaspekt durch ein Verfahren mit den Merkmalen des Anspruchs 1 oder 2 und in ihrem Anordnungsaspekt durch eine Anordnung mit den Merkmalen des Anspruchs 12 gelöst.

Die Erfindung schließt den grundlegenden Gedanken einer automatischen Bestimmung des geeignetsten Ausgangspunktes für die Herstellung einer Konferenzschaltung aufgrund von gespeicherten Routing-Informationen bezüglich der relevanten Teilnehmer ein. Sie schließt weiter den Gedanken ein, diese - zentral oder dezentral in einer Datenbasis bereitstehender - Routing-Informationen in einem mit dem TK-Netz verbundenen Server oder einem Vermittlungsrechner einer Vermittlungsstelle zur Ermittlung einer optimierten Verbindungsstruktur zu verarbeiten. Die Herstellung dieser Verbindungsstruktur, d. h. der Aufbau der gewünschten Konferenzschaltung, wird dann durch den Server oder Vermittlungsrechner selbsttätig der unter Kapazitäts- oder Kostengesichtspunkten geeignetsten Vermittlungsstelle übertragen. Hierbei kann es sich durchaus um diejenige Vermittlungsstelle handeln, deren Vermittlungsrechner die Berechnungen ausgeführt hat - es kann aber auch eine Verbindungsaufbau-Anforderung an eine andere Vermittlungsstelle generiert und übermittelt werden.

Für komplexere Konferenzstrukturen, die beispielsweise jeweils mehrere Teilnehmer an verschiedenen, insbesondere räumlich weit voneinander entfernten, Vermittlungsstellen einschließen, ist eine Verteilung der Verbindungsaufbau-Anforderungen an verschiedene Vermittlungsstellen zur Realisierung der entsprechend komplexen Verbindungsstruktur zweckmäßig.

Alternativ zur erwähnten selbsttätigen Beauftragung einer Vermittlungsstelle durch einen die Verbindungsstruktur berechnenden Server oder Vermittlungsrechner kann das Berechnungsergebnis dem die Konferenzschaltung benötigenden Teilnehmer oder einem beauftragten Agenten eines Call-Centers übersandt werden, der nachfolgend von sich aus den Verbindungsaufbau über die geeignetste Vermittlungsstelle veranlaßt. In diesem Zusammenhang können dem Teilnehmer oder Agenten auch die Daten zur errechneten optimalen Verbindungsstruktur übergeben werden, und er veranlaßt den Schaltungsaufbau gemäß diesen Daten bzw. gemäß der errechneten Verbindungsstruktur. Alternativ können die Daten aber auch an die ausgewählte Vermittlungsstelle übertragen werden und stehen dort zur Realisierung des durch den Teilnehmer bzw. Agenten "manuell" beauftragten Schaltungsaufbaus bereit. Insofern umfaßt die Erfindung auch Varianten, bei denen ein Buchungswunsch unter Mitwirkung mehrerer Agenten von Call-Centern oder anderen "Unterauftragnehmern" realisiert wird, wobei dann die relevanten Informationen bezüglich der Verbindungsstruktur nicht an den buchenden Teilnehmer oder primär beauftragten Agenten gehen müssen, sondern auch an einen oder mehrere der übrigen Beteiligten gehen können.

Die Berechnung einer optimierten Verbindungsstruktur - und damit des ausgewählten Vermittlungsrechners als Ausgangspunkt - kann allein aufgrund von Routing-Informationen unter Beachtung der Leitungskapazitäten des Netzes bzw. der Netze ausgeführt werden, wobei eine unter Kapazitätsaspekten optimierte Konferenzschaltung realisiert wird. Dies bietet dem Benutzer insbesondere Vorteile hinsichtlich der Standfestigkeit und Störfreiheit der Verbindungen sowie gegebenenfalls hinsichtlich der verfügbaren Kanalkapazität, beispielsweise für Bildübertragungen während der Konferenz.

In einer anderen zweckmäßigen Ausführung werden für die Berechnung der Verbindungsstruktur zusätzlich Tarifinformationen herangezogen, die ebenfalls zentral im Netz oder dezentral in einem Server oder Vermittlungsrechner gespeichert sind. Hierbei läßt sich eine kostenoptimierte Konferenzschaltung realisieren.

In beiden Varianten ist weiterhin eine Ausführung vorteilhaft, bei der nicht nur eine (optimierte) Verbindungsstruktur berechnet wird, sondern der Server bzw. Vermittlungsrechner zudem Alternativen bereitstellt. Dies ermöglicht das kurzfristige Ausweichen auf eine alternative Verbindungsstruktur, falls bei der unter Kapazitäts- und/oder Kostenaspekten optimalen Struktur aktuell eine hohe Leitungs-Auslastung zu verzeichnen ist oder andere technische Probleme auftreten. Auch hier ist jeweils eine automatisierte oder bedienergeführte Umschaltung möglich.

Die Übermittlung der für den Aufbau und die Steuerung der Verbindungsstruktur benötigten Informationen zu den beteiligten Vermittlungsstellen erfolgt entweder über Datenkanäle eines IP-Netzes oder Daten- bzw. Signalisierungskanäle eines digitalen TK-Netzes, z.B. eines ISDN-orientierten Netzes. Über diese Datenkanäle ist auch die Steuerung eines kaskadierten, unter Beteiligung mehrerer Vermittlungsstellen hergestellten Schaltungsaufbaus durch einen Steuerrechner einer Vermittlungsstelle oder einen Server im IP-Netz möglich. Die Buchung der Konferenzschaltung kann mithin sowohl telefonisch (wobei das Endgerät des Teilnehmers oder Agenten ein Telekommunikations-Endgerät, insbesondere Festnetz- oder Mobiltelefon ist) oder direkt über das Internet oder ein an dieses angeschlossenes weiteres Datennetz von einem PC oder PDA o. ä. mit Internet-Browser erfolgen.

Die Konferenzschaltung kann in einer ersten zweckmäßigen Ausführung ausschließlich Telekommunikations-Endgeräte umfassen, die direkt an ein öffentliches Telefonnetz oder aber an eine private Telekommunikationsanlage angeschlossen sind. In einer weiteren vorteilhaften Ausführung umfaßt sie neben Telekommunikations-Endgeräten auch Datenendgeräte von Teilnehmern eines IP-Netzes, die insbesondere durch Media-Gateways mit dem Telekommunikationsnetz verbunden sein können. Speziell bei Internkontinentalverbindungen kann auch die Zwischenschaltung von VoIP (Voice-over-IP)-Strecken in Sprachübertragungsstrecken sinnvoll sein. In diesem Sinne wäre dann ein Datennetz in ein Telefonnetz oder zwischen mehreren Telefonnetzen eingebunden, wobei die Steuerung der Konferenzschaltung unter Einbeziehung mindestens eines Servers in dem Datennetz erfolgt.

Die zur Berechnung der optimierten Verbindungsstruktur erforderlichen Datenbasen, insbesondere die Routing-Datenbasis, gegebenenfalls aber auch die Tarifinformations-Datenbasis, sind zweckmäßiger Weise zentral in dem IP-Netz verfügbar und für den die Berechnung ausführenden Server oder Vermittlungsrechner zugreifbar. Grundsätzlich ist aber auch eine dezentrale Datenvorhaltung in den Servern oder Vermittlungsrechnern selbst möglich.

Der (oder jeder) in der erfindungsgemäßen Anordnung vorgesehene Server hat eine Schnittstelle zur daten- und steuerungsseitigen Anbindung an die Vermittlungsstellen des Telekommunikationsnetzes, und die Übermittlung der für den Verbindungsaufbau und die Steuerung der Konferenzschaltung relevanten Informationen erfolgt entweder über Datenkanäle des IP-Netzes oder Daten- bzw. Signalisierungskanäle des TK-Netzes. In der Variante der Realisierung der Konferenzschaltung über Agenten eines Call-Centers ist natürlich eine Vernetzung mit deren Datenendgeräten zweckmäßig - die Erfindung ist aber auch aufgrund einer direkt von einem Teilnehmer ausgehenden Anforderung zum Aufbau einer Konferenzschaltung ausführbar.

Zur Speicherung einer oder mehrerer berechneter Verbindungsstrukturen sind sowohl in dem die Berechnung ausführenden Server bzw. Vermittlungsrechner als auch in einem Arbeitsrechner der die Verbindung aufbauenden Vermittlungsstelle(n) geeignete Speicher vorgesehen. Hierbei ist eine Differenzierung der Speicherinhalte bei den einzelnen Einrichtungen möglich und teilweise - insbesondere bei einem kaskadierten Aufbau einer durch mehrere Vermittlungsstellen/Switches realisierten Konferenzschaltung - auch erforderlich.

Allgemein ist hier darauf hinzuweisen, daß der in den Unterlagen durchgehend gebrauchte Begriff "Vermittlungsstelle" per allgemeinernd zu verstehen ist und lokale, regionale und nationale Vermittlungsstellen ebenso einschließt wie die sogenannten Switches und Gateways, die unterschiedliche Netze - beispielsweise Festnetze und Mobilfunknetze - miteinander verbinden. In einer perspektivisch wichtigen Ausführung der Erfindung wird deren Konzept auf den Aufbau und die Steuerung von Video- und Multimediakonferenzen angewandt, die nicht notwendigerweise über eine Vermittlungsanlage im engeren Sinne erfolgt.

Vorteile und Zweckmäßigkeit der Erfindung ergeben sich im übrigen aus den Unteransprüchen sowie der nachfolgenden, skizzenartigen Beschreibung von Ausführungsformen anhand der Figuren.

### Von diesen zeigen:

- Fig.1:: eine schematische Gesamtansicht einer Anordnung gemäß einer Ausführungsform der Erfindung; und
- Fig 2A, 2B, 2C:: skizzenartige Darstellungen zur Verdeutlichung bestimmter Typen von Verbindungsstrukturen.

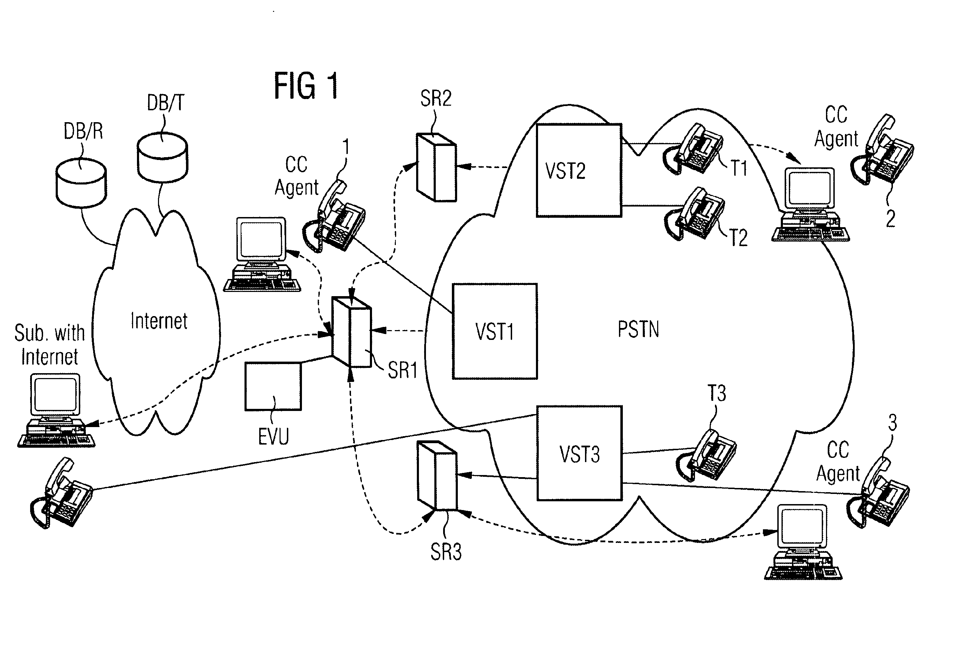

Fig. 1 zeigt schematisch eine Anordnung zum Aufbau einer Konferenzschaltung zwischen mehreren Endgeräten T1, T2, T3 eines Telefonnetzes PSTN, welche an zwei verschiedene Vermittlungsstellen VST2 und VST3 des Telefonnetzes PSTN angeschlossen sind, unter Verbindungsaufbau und Steuerung durch einen an eine dritte Vermittlungsstelle VST1 angeschlossenen Datennetzserver SR1. Der Datennetzserver SR1 steht in Verbindung mit zwei weiteren Servern SR2 und SR3, an die Agenten-Endgeräte CC Agent 2 und CC Agent 3 angeschlossen sind, und an ihn ist direkt ein Agenten-Endgerät CC Agent 1 angeschlossen.

Der Datennetzserver SR1 ist an das Internet angeschlossen und hat über dieses (unter anderem) Zugriff auf eine Datenbasis DB/R für Routing-Informationen und eine Datenbasis DB/T für Tarifinformationen bezüglich des öffentlichen Telefonnetzes PSTN. Der Datennetzserver SR1 umfaßt eine Berechnungseinheit EVU, in der unter Zugriff auf diese Datenbasen DB/R und DB/T optimale Verbindungsstrukturen zur Herstellung einer Konferenzschaltung zwischen den Teilnehmern der Endgeräte T1, T2 und T3 unter Einbeziehung der Agenten 1, 2, 3 des Call-Centers errechnet werden.

Aufgrund des Berechnungsergebnisses sendet der Datennetzserver SR1 eine Verbindungsaufbau-Anforderung an den Vermittlungsstellen VST1 oder VST2 zugeordnete Vermittlungsrechner bzw. Server oder baut - je nach konkreter Leitungskapazität und Tarifsituation - selbst "federführend" die gewünschte Konferenzschaltung auf. Die Buchung der Konferenzschaltung kann hierbei von einem der Call-Center-Agenten 1, 2, 3 über eines der Endgeräte CC Agent 1, CC Agent 2 oder CC Agent 3 übermittelt worden sein.

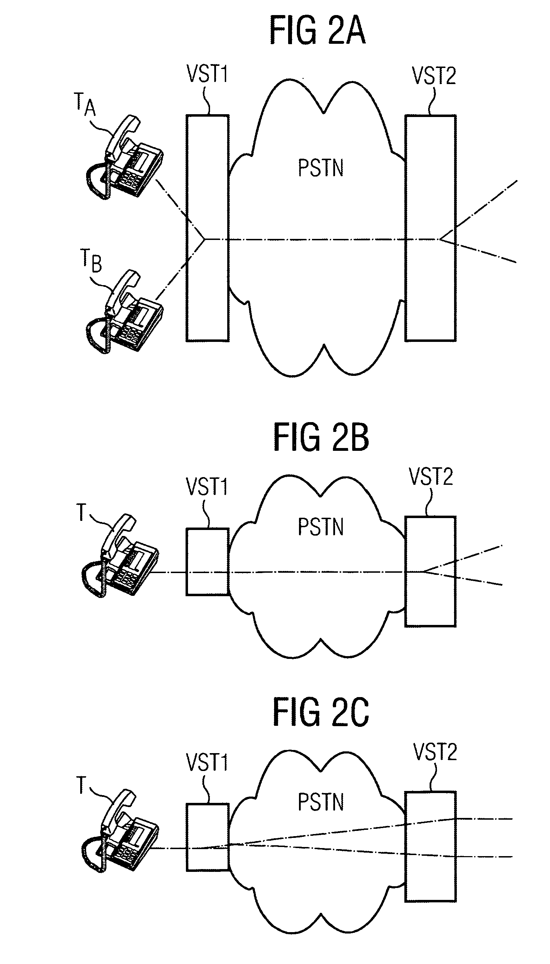

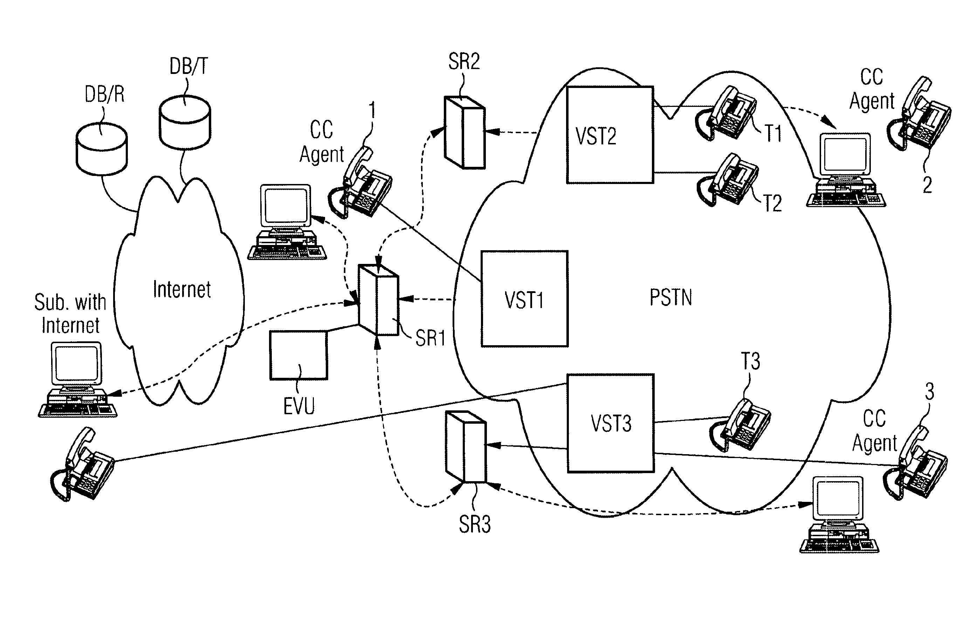

In Fig. 2A bis 2C sind schematisch verschiedene Verbindungsstrukturen zum Aufbau von Konferenzschaltungen im Telefonnetz PSTN gezeigt - und zwar vereinfachend unter Annahme der Beteiligung nur zweier Vermittlungsstellen VST1 und VST2. Fig. 2A zeigt eine zweifach Standkonfiguration zur Konferenz-Verschaltung zweier an die Vermittlungsstelle VST1 angeschlossener Endgeräte T_{A} und T_{B} mit zwei (nicht dargestellten) weiteren Endgeräten auf seiten der Vermittlungsstelle VST2. Fig. 2B zeigt eine einfache Sternschaltung, die in der Vermittlungsstelle VST2 realisiert wird, und Fig. 2C zeigt eine ebensolche, die aber in der Vermittlungsstelle VST1 verzweigt ist.

Die Ausführung der Erfindung ist nicht auf diese Beispiele und die oben hervorgehobenen Aspekte der Erfindung beschränkt, sondern ebenso in einer Vielzahl von Abwandlungen möglich, die im Rahmen fachgemäßen Handelns liegen.

## Patentansprüche

1. Verfahren zum Aufbau und zur Steuerung einer Konferenzschaltung zwischen mehreren, insbesondere an verschiedenen Netzknoten angeschlossenen Teilnehmer-Endgeräten (T, T1, T2, T3, T_{A}, T_{B}) eines Telekommunikations- und/oder IP-Netzes (PSTN),
**dadurch gekennzeichnet,**
i) **daß** ein Auftrag zur Herstellung der Konferenzschaltung entweder direkt von einem Teilnehmer-Endgerät (T, T1, T2, T3, T_{A}, T_{B}) oder auch von einem Agenten-Endgerät (1, 2, 3) eines Call-Centers an einen Vermittlungsrechner oder Datennetzserver (SR1) im Netz übermittelt wird, in dem mindestens eine Routing-Information bezüglich der Teilnehmer der Konferenzschaltung gespeichert ist,
ii) **daß** in dem Vermittlungsrechner oder Datennetzserver (SR1) aufgrund der Routing-Information eine unter Kapazitätsaspekten optimierte Verbindungsstruktur der Konferenzschaltung mittels einer Berechnungseinheit (EVU) berechnet wird,
iii) **daß** in Abhängigkeit vom Berechnungsergebnis der Berechnungseinheit (EVU) durch die dem Vermittlungsrechner oder Datennetzserver (SR1) unter Kapazitäts- oder Kostengesichtspunkten geeignetste Vermittlungsstelle (VST1, VST2, VST3) selbsttätig die Verbindung zu den Teilnehmer-Endgeräten (T, T1, T2, T3, T_{A}, T_{B}) der Konferenzschaltung aufgebaut und gesteuert wird,
iv) **daß** durch den Vermittlungsrechner oder Datennetzserver (SR1) unter Kapazitäts- und Kostenaspekten eine oder mehrere alternative Verbindungsstrukturen berechnet werden, falls bei der optimierten Verbindungsstruktur aktuell eine hohe Leitungsauslastung oder andere technische Probleme auftreten, und
v) **daß** zum Aufbau der Konferenzschaltung neben der Verbindungsaufbau-Anforderung an die ausgewählte Vermittlungsstelle (VST1, VST2, VST3) Daten bezüglich der alternativen Verbindungsstrukturen übermittelt werden und die ausgewählte Vermittlungsstelle (VST1, VST2, VST3) oder Vermittlungsstellen (VST1, VST2, VST3) bei Kapazitätsmangel oder technischen Problemen die Verbindungsaufbau-Anforderung und die zugehörigen Daten einer alternativen Verbindungsstruktur jeweils an eine weitere, gemäß der alternativen Verbindungsstruktur ausgewählte Vermittlungsstelle (VST1, VST2, VST3) übermitteln, wodurch eine automatisierte Umschaltung möglich ist.

2. Verfahren nach Anspruch 1,
**dadurch gekennzeichnet, daß** im Vermittlungsrechner oder im Datennetzserver (SR1, SR2, SR3) Tarifinformationen bezüglich der Anschlüsse der Teilnehmer der Konferenzschaltung gespeichert sind und zur Berechnung einer kostenoptimierten Verbindungsstruktur mit verarbeitet werden.

3. Verfahren nach Anspruch 2,
**dadurch gekennzeichnet, daß** der Vermittlungsrechner oder Datennetzserver (SR1, SR2, SR3) Daten der optimierten Verbindungsstruktur direkt an die angewählte Vermittlungsstelle (VST1, VST2, VST3) oder ausgewählten Vermittlungsstellen (VST1, VST2, VST3) übermittelt.

4. Verfahren nach einem der vorangehenden Ansprüche,
**dadurch gekennzeichnet, daß** durch mehrere Vermittlungsstellen (VST1, VST2, VST3) eine kaskadierte Verbindungsstruktur unter Einbeziehung von jeweils mehreren einer Vermittlungsstelle (VST1, VST2, VST3) zugeordneten Teilnehmer-Endgeräten (T, T1, T2, T3, T_{A}, T_{B}) aufgebaut wird.

5. Verfahren nach einem der vorangehenden Ansprüche,
**dadurch gekennzeichnet, daß** mindestens für einen Teil der Nachrichtenübermittlungen zum Aufbau der Konferenzschaltung Datenkanäle eines IP-Netzes genutzt werden.

6. Verfahren nach einem der vorangehenden Ansprüche,
**dadurch gekennzeichnet, daß** mindestens für einen Teil der Nachrichtenübermittlungen zum Aufbau der Konferenzschaltung Daten- bzw. Signalisierungskanäle eines digitalen Telekommunikationsnetzes (PSTN) genutzt werden.

7. Verfahren nach einem der vorangehenden Ansprüche,
**dadurch gekennzeichnet, daß** für einen Aufbau und die Steuerung der Konferenzschaltung über mehrere Netzknoten der Vermittlungsrechner (SR1, SR2, SR3) einer von mehreren beteiligten Vermittlungsstellen (VST1, VST2, VST3) als zentraler Steuerrechner fungiert.

8. Verfahren nach einem der vorangehenden Ansprüche,
**dadurch gekennzeichnet, daß** die Konferenzschaltung zwischen Datenendgeräten von Teilnehmern eines IP-Netzes und Telekommunikations-Endgeräten, die direkt an ein öffentliches Telefonnetz (PSTN) angeschlossen sind, und/oder Telekommunikations-Endgeräten, die an eine private Telekommunikationsanlage angeschlossen sind, aufgebaut wird, wobei Netzverbindungen insbesondere durch Media-Gateways hergestellt werden.

9. Verfahren nach einem der vorangehenden Ansprüche,
**dadurch gekennzeichnet, daß** die Konferenzschaltung zwischen Telekommunikations-Endgeräten unter Zwischenschaltung von Datennetzkanälen für Voice-Over-IP-Verbindungen hergestellt wird, wobei an der Steuerung der Konferenzschaltung mindestens ein Datennetzserver (SR1, SR2, SR3) mitwirkt.

10. Anordnung zur Durchführung des Verfahrens nach einem der vorangehenden Ansprüche, mit einer Mehrzahl von Vermittlungsstellen (VST1, VST2, VST3) in mindestens einem Telekommunikationsnetz (PSTN) und einer Mehrzahl von an die Vermittlungsstellen (VST1, VST2, VST3) angeschlossenen Teilnehmer-Endgeräten (T, T1, T2, T3, TA, TB), die zu einer Konferenzschaltung verbunden sind, **gekennzeichnet durch**
einen Vermittlungsrechner oder Datennetzserver (SR1, SR2, SR3) in dem mindestens einem Telekommunikationsnetz oder einem mit diesem verbundenen IP-Netz, welcher
- eine Routing-Datenbasis zum Speichern von Routing-Information für das Telekommunikationsnetz bzw. die Telekommunikationsnetze,
- eine Empfangseinheit zum Empfangen eines Auftrages zur Herstellung einer Konferenzschaltung entweder direkt von einem Teilnehmer-Endgerät (T, T1, T2, T3, T_{A}, T_{B}) oder auch von einem Agenten-Endgerät (1, 2, 3) eines Call-Centers,
- eine Verbindungsstruktur-Berechnungseinheit (EVU) zum Berechnen mindestens einer unter Kapazitätsaspekten optimierten Verbindungsstruktur der Konferenzschaltung sowie einer oder mehrerer alternativer Verbindungsstrukturen der Konferenzschaltung unter Kapazitäts- und Kostenaspekten, falls bei der optimierten Verbindungsstruktur aktuell eine hohe Leitungsauslastung oder andere technische Probleme auftreten, wobei zum Aufbau der Konferenzschaltung neben der Verbindungsaufbau-Anforderung an die ausgewählte Vermittlungsstelle (VST1, VST2, VST3) Daten bezüglich der alternativen Verbindungsstrukturen übermittelt werden und die ausgewählte Vermittlungsstelle (VST1, VST2, VST3) oder Vermittlungsstellen (VST1, VST2, VST3) bei Kapazitätsmangel oder technischen Problemen die Verbindungsaufbau-Anforderung und die zugehörigen Daten einer alternativen Verbindungsstruktur jeweils an eine weitere, gemäß der alternativen Verbindungsstruktur ausgewählte Vermittlungsstelle (VST1, VST2, VST3) übermittelt werden, wodurch eine automatisierte Umschaltung möglich ist,
- eine Sendeeinheit zum Absetzen der Verbindungsaufbau-Anforderung und der Daten der errechneten Verbindungsstruktur bzw. Verbindungsstrukturen an eine oder mehrere ausgewählte Vermittlungsstelle(n) (VST1, VST2, VST3) aufweist, und
die dem Vermittlungsrechner oder Datennetzserver (SR1) unter Kapazitäts- oder Kostengesichtspunkten geeignetste Vermittlungsstelle (VST1, VST2, VST3) so ausgebildet ist, daß sie in Abhängigkeit vom Berechnungsergebnis der Berechnungseinheit (EVU) selbsttätig die Verbindung zu den Teilnehmer-Endgeräten (T, T1, T2, T3, T_{A}, T_{B}) der Konferenzschaltung aufbaut und steuert.

11. Anordnung nach Anspruch 10,
**dadurch gekennzeichnet, daß** der Vermittlungsstellen-Rechner oder Datennetzserver (SR1, SR2, SR3) einen Tarifinformationsspeicher zur Speicherung von Tarifinformationen bezüglich der Teilnehmer des Telekommunikationsnetzes oder der Telekommunikationsnetze aufweist und die Berechnungseinheit (EVU) zur Berücksichtigung von Tarifinformation zur Berechnung der optimierten Verbindungsstruktur bzw. Verbindungsstrukturen ausgebildet ist.

12. Anordnung nach Anspruch 10 oder 11,
**dadurch gekennzeichnet, daß** die oder jede ausgewählte Vermittlungsstelle (VST1, VST2, VST3) eine Schnittstelle zur Verbindung mit dem oder jedem Datennetzserver (SR1, SR2, SR3) in dem IP-Netz aufweist, welche zu einer Steuerung des Verbindungsaufbaus über den oder die angeschlossenen Datennetzserver (SR1, SR2, SR3) ausgebildet ist.

13. Anordnung nach einem der Ansprüche 10 bis 12,
**dadurch gekennzeichnet, daß** der oder die Datennetzserver (SR1, SR2, SR3) über das IP-Netz mit Agenten-Endgeräten (1, 2, 3) eines Call-Centers verbunden ist bzw. sind.

14. Anordnung nach einem der Ansprüche 10 bis 12,
**dadurch gekennzeichnet, daß** in dem IP-Netz eine zentralisierte Routing-Datenbasis und wahlweise ein zentralisierter Tarif-Informationsspeicher vorgesehen ist, auf die mehrere Vermittlungsrechner oder Datennetzserver (SR1, SR2, SR3) zugreifen.

## Claims

1. Method to establish and control a conference call between several subscriber terminals (T, T1, T2, T3, T_{A}, T_{B}) of a telecommunication and/or IP network (PSTN), in particular subscriber terminals connected to different network nodes,
**characterized in**
i) **that** a request for the setup of a conference call is transmitted either directly from a subscriber terminal (T, T1, T2, T3, T_{A}, T_{B}) or from an agent terminal (1, 2, 3) of a call center to a switching computer or data network server (SR1) in the network, in which at least one routing information item pertaining to the participant of the conference call is stored,
ii) in that in the switching computer or data network server (SR1), based on the routing information, a connecting structure of the conference call optimized from the capacity perspective is calculated by means of a calculating unit (EVU),
iii) in that, as a function of the calculation result of the calculating unit (EVU), the connection to the subscriber terminals (T, T1, T2, T3, T_{A}, T_{B}) of the conference call is automatically established and controlled by the telephone switch (VST1, VST2, VST3) best suited for the switching computer or data network server (SR1) from the capacity and cost perspective,
iv) in that, one or more alternative connecting structures are calculated by the switching computer or data network server (SR1) from the capacity and cost perspective, if currently a high line utilization or other technical problems occur(s) with the optimized connecting structure, and
v) in that, to setup the conference call, in addition to the connection setup request, data pertaining to the alternative connecting structures are transmitted to the selected telephone switch (VST1, VST2, VST3), and the selected telephone switch (VST1, VST2, VST3) or telephone switches (VST1, VST2, VST3), in the case of a capacity deficit or technical problems, transmit(s) the connection setup request and the associated data of an alternative connecting structure in each case to an additional telephone switch (VST1, VST2, VST3) selected in accordance with the alternative connecting structure, as a result of which an automated switching is possible.

2. Method according to Claim 1,
**characterized in that**,
in the switching computer or in the data network server (SR1, SR2, SR3), rate information pertaining to the connections of the participants of the conference call are stored and also processed for the calculation of a cost-optimized connecting structure.

3. Method according to Claim 2,
**characterized in that**
the switching computer or data network server (SR1, SR2, SR3) transmits data of the optimized connecting structure directly to the selected telephone switch (VST1, VST2, VST3) or selected telephone switches (VST1, VST2, VST3).

4. Method according to any one of the preceding claims,
**characterized in that**,
by means of several telephone switches (VST1, VST2, VST3), a cascaded connecting structure is set up taking into consideration in each case several subscriber terminals (T, T1, T2, T3, T_{A}, T_{B}) associated with a telephone switch (VST1, VST2, VST3).

5. Method according to any one of the preceding claims,
**characterized in that**
at least for a portion of the message transmission for the setup of the conference call, data channels of an IP network are used.

6. Method according to any one of the preceding claims,
**characterized in that**
at least for a portion of the message transmissions for the setup of the conference call, data and signaling channels of a digital telecommunication network (PSTN) are used.

7. Method according to any one of the preceding claims,
**characterized in that**,
to establish and control the conference call, via several network nodes of the switching computers (SR1, SR2, SR3), one of several participating telephone switches (VST1, VST2, VST3) functions as central control computer.

8. Method according to any one of the preceding claims,
**characterized in that**
the conference call is set up between data terminals of subscribers of an IP network and telecommunication terminals that are connected directly to a public telephone network (PSTN), and/or telecommunication terminals that are connected to a private communication network, wherein network connections are established in particular by media gateways.

9. Method according to any one of the preceding claims,
**characterized in that**
the conference call is established between telecommunication terminals with interconnection of data network channels for voice-over IP connections, wherein at least one data network server (SR1, SR2, SR3) collaborates in the control of the conference call.

10. Arrangement for implementing the method according to any one of the preceding claims, with a plurality of telephone switches (VST1, VST2, VST3) in at least one telecommunication network (PST) and a plurality of subscriber terminals (T, T1, T2, T3, TA, TB) connected to the telephone switches (VST1, VST2, VST3), which are connected for a conference call,
**characterized by**
a switching computer or data network server (SR1, SR2, SR3) in the at least one telecommunication network or IP network connected to said telecommunication network, which comprises
- a routing database for storing routing information for the telecommunication network or the telecommunication networks,
- a receiving unit for receiving a request for the set-up of a conference call either directly from a subscriber terminal (T, T1, T2, T3, T_{A}, T_{B}) or from an agent terminal (1, 2, 3) of a call center,
- a connecting structure calculating unit (EVU) for calculating at least one connecting structure of the conference call, optimized from the capacity perspective, as well as one or more alternative connecting structures of the conference call, from the capacity and cost perspective, if currently a high line utilization or other technical problems occur(s) with the optimized connecting structure, wherein, to setup the conference call, in addition to the connection setup request, data pertaining to the alternative connecting structures are transmitted to the selected telephone switch (VST1, VST2, VST3), and the selected telephone switch (VST1, VST2, VST3) or telephone switches (VST1, VST2, VST3), in the case of a capacity deficit or technical problems, the connection setup request and the associated data of an alternative connecting structure in each case are transmitted to an additional telephone switch (VST1, VST2, VST3) selected in accordance with the alternative connecting structure, as a result of which an automated switching is possible.
- a transmitting unit for transmitting the connection setup request and the data of the calculated connecting structure or connecting structures to one or more selected telephone switch(es) (VST1, VST2, VST3), and
the telephone switch (VST1, VST2, VST3) that is most suitable from the capacity and cost perspective for the switching computer or data network server (SR1) is designed so that, as a function of the calculation result of the calculating unit (EVU), the connection to the subscriber terminals (T, T1, T2, T3, T_{A}, T_{B}) of the conference call is established and controlled automatically.

11. Arrangement according to Claim 10,
**characterized in that**
the telephone switch computer or data network server (SR1, SR2, SR3) comprises a rate information memory for storing rate information regarding the subscribers of the telecommunication network or of the telecommunication networks, and the calculating unit (EVU) is designed for taking into consideration rate information for the calculation of the optimized connecting structure or connecting structures.

12. Arrangement according to Claim 10 or 11,
**characterized in that**
the or each selected telephone switch (VST1, VST2, VST3) has an interface for the connection to the or each data network server (SR1, SR2, SR3) in the IP network, which is designed for controlling the connection setup via the connected data network server(s) (SR1, SR2, SR3).

13. Arrangement according to any one of Claims 10 to 12,
**characterized in that**
the data network server(s) (SR1, SR2, SR3) is or are connected to the agent terminals (1, 2, 3) of a call center via the IP network.

14. Arrangement according to any one of Claims 10 to 12,
**characterized in that**,
in the IP network, a centralized routing database and, if desired, a centralized rate information memory are provided, which are accessed by several switching computers or data network servers (SR1, SR2, SR3).

## Revendications

1. Procédé pour établir et contrôler une conférence téléphonique entre plusieurs terminaux d'abonnés (T, T1, T2, T3, T_{A}, T_{B}) d'un réseau de télécommunication et/ou IP (PSTN), en particulier de terminaux d'abonnés connectés à différents noeuds de réseau,
**caractérisé en ce**
i) **qu'**une requête pour l'établissement d'une conférence téléphonique est transmise soit directement à partir d'un terminal d'abonné (T, T1, T2, T3, T_{A}, T_{B}), soit à partir d'un terminal d'agent (1, 2, 3) d'un centre d'appels vers un ordinateur de commutation ou un serveur de réseau de données (SR1) dans le réseau, dans lequel au moins un élément d'information de routage concernant le participant de la conférence téléphonique est stocké,
ii) **que** dans l'ordinateur de commutation ou le serveur de réseau de données (SR1), sur la base des informations de routage, une structure de connexion de la conférence téléphonique optimisée du point de vue de la capacité est calculée au moyen d'une unité de calcul (EVU),
iii) **qu'**en fonction du résultat de calcul de l'unité de calcul (EVU), la connexion aux terminaux d'abonnés (T, T1, T2, T3, T_{A}, T_{B}) de la conférence téléphonique est automatiquement établie et contrôlée par le commutateur téléphonique (VST1, VST2, VST3) le mieux adapté pour l'ordinateur de commutation ou le serveur de réseau de données (SR1) du point de vue de la capacité et des coûts,
iv) **qu'**une ou plusieurs autres structures de connexion sont calculées par l'ordinateur de commutation ou le serveur de réseau de données (SR1) du point de vue de la capacité et des coûts, s'il existe actuellement une forte utilisation de la ligne ou d'autres problèmes techniques avec la structure de connexion optimisée, et
v) **que**, pour l'établissement de la conférence téléphonique, en plus de la requête d'établissement de connexion, des données concernant les autres structures de connexion sont transmises au commutateur téléphonique sélectionné (VST1, VST2, VST3), et le commutateur téléphonique (VST1, VST2, VST3) ou les commutateurs téléphoniques (VST1, VST2, VST3) sélectionné(s), dans le cas d'une perte de capacité ou de problèmes techniques, transmet/transmettent la requête d'établissement de connexion et les données associées d'une autre structure de connexion dans chaque cas à un commutateur téléphonique supplémentaire (VST1, VST2, VST3) sélectionné en fonction de l'autre structure de connexion, suite à quoi une commutation automatique est possible.

2. Procédé selon la revendication 1,
**caractérisé en ce que**,
dans l'ordinateur de commutation ou dans le serveur de réseau de données (SR1, SR2, SR3), des informations de débit concernant les connexions des participants à la conférence téléphonique sont stockées et également traitées pour le calcul d'une structure de connexion optimisée du point de vue du coût.

3. Procédé selon la revendication 2,
**caractérisé en ce que**
l'ordinateur de commutation ou le serveur de réseau de données (SR1, SR2, SR3) transmet les données de la structure de connexion optimisée directement au commutateur téléphonique sélectionné (VST1, VST2, VST3) ou aux commutateurs téléphoniques sélectionnés (VST1, VST2, VST3).

4. Procédé selon l'une quelconque des revendications précédentes,
**caractérisé en ce,**
**qu'**au moyen de plusieurs commutateurs téléphoniques (VST1, VST2, VST3), une structure de connexion en cascade est établie en prenant en considération dans chaque cas plusieurs terminaux d'abonnés (T, T1, T2, T3, T_{A}, T_{B}) associés à un commutateur téléphonique (VST1, VST2, VST3).

5. Procédé selon l'une quelconque des revendications précédentes,
**caractérisé en ce**
**qu'**au moins pour une partie de la transmission du message pour l'établissement de la conférence téléphonique, des canaux de données d'un réseau IP sont utilisés.

6. Procédé selon l'une quelconque des revendications précédentes,
**caractérisé en ce**
**qu'**au moins pour une partie des transmissions de message pour l'établissement de la conférence téléphonique, des canaux de données et de signalisation d'un réseau de télécommunication numérique (PSTN) sont utilisés.

7. Procédé selon l'une quelconque des revendications précédentes,
**caractérisé en ce que**,
pour établir et contrôler la conférence téléphonique, par le biais de plusieurs noeuds de réseau des ordinateurs de commutation (SR1, SR2, SR3), l'un des plusieurs commutateurs téléphoniques participants (VST1, VST2, VST3) fait office d'ordinateur de contrôle central.

8. Procédé selon l'une quelconque des revendications précédentes,
**caractérisé en ce que**
la conférence téléphonique est établie entre des terminaux de données d'abonnés d'un réseau IP et des terminaux de télécommunication qui sont connectés directement à un réseau téléphonique public (PSTN), et/ou des terminaux de télécommunication qui sont connectés à un réseau de communication privé, dans lequel les connexions de réseau sont établies en particulier par des passerelles média.

9. Procédé selon l'une quelconque des revendications précédentes,
**caractérisé en ce que**
la conférence téléphonique est établie entre des terminaux de télécommunication avec une interconnexion des canaux de réseau de données pour des connexions de voix sur IP, dans laquelle au moins un serveur de réseau de données (SR1, SR2, SR3) participe au contrôle de la conférence téléphonique.

10. Système pour mettre en oeuvre le procédé selon l'une quelconque des revendications précédentes, comportant une pluralité de commutateurs téléphoniques (VST1, VST2, VST3) dans au moins un réseau de télécommunication (PSTN) et une pluralité de terminaux d'abonnés (T, T1, T2, T3, TA, TB) connectés aux commutateurs téléphoniques (VST1, VST2, VST3), qui sont connectés pour une conférence téléphonique,
**caractérisé par**
un ordinateur de commutation ou un serveur de réseau de données (SR1, SR2, SR3) dans l'au moins un réseau de télécommunication ou réseau IP connecté audit réseau de télécommunication, qui comprend
- une base de données de routage pour stocker des informations de routage pour le réseau de télécommunication ou les réseaux de télécommunication,
- une unité de réception pour recevoir une requête pour l'établissement d'une conférence téléphonique soit directement à partir d'un terminal d'abonné (T, T1, T2, T3, T_{A}, T_{B}) soit à partir d'un terminal d'agent (1, 2, 3) d'un centre d'appels,
- une unité de calcul de structure de connexion (EVU) pour calculer au moins une structure de connexion de la conférence téléphonique, optimisée du point de vue de la capacité, ainsi qu'une ou plusieurs autres structures de connexion de la conférence téléphonique, du point de vue de la capacité et des coûts, s'il existe actuellement une forte utilisation de la ligne ou d'autres problèmes techniques avec la structure de connexion optimisée, dans laquelle, pour établir la conférence téléphonique, en plus de la requête d'établissement de connexion, des données concernant les autres structures de connexion sont transmises au commutateur téléphonique sélectionné (VST1, VST2, VST3), et au commutateur téléphonique sélectionné (VST1, VST2, VST3) ou aux commutateurs téléphoniques sélectionnés (VST1, VST2, VST3), dans le cas d'une perte de capacité ou de problèmes techniques, la requête d'établissement de connexion et les données associées d'une autre structure de connexion dans chaque cas sont transmises à un commutateur téléphonique supplémentaire (VST1, VST2, VST3) sélectionné en fonction de l'autre structure de connexion, suite à quoi une commutation automatique est possible,
- une unité de transmission pour transmettre la requête d'établissement de connexion et les données de la structure de connexion ou les structures de connexion calculée(s) à un ou plusieurs commutateur(s) téléphonique(s) sélectionné(s) (VST1, VST2, VST3), et
le commutateur téléphonique (VST1, VST2, VST3) qui est le plus approprié du point de vue de la capacité et des coûts pour l'ordinateur de commutation ou le serveur de réseau de données (SR1) est conçu de telle sorte que, en fonction du résultat du calcul de l'unité de calcul (EVU), la connexion aux terminaux d'abonnés (T, T1, T2, T3, T_{A}, T_{B}) de la conférence téléphonique est établie et contrôlée automatiquement.

11. Système selon la revendication 10,
**caractérisé en ce que**
l'ordinateur de commutation téléphonique ou le serveur de réseau de données (SR1, SR2, SR3) comprend une mémoire d'informations de débit pour stocker des informations de débit concernant les abonnés du réseau de télécommunication ou des réseaux de télécommunication, et l'unité de calcul (EVU) est conçue pour prendre en considération les informations de débit pour le calcul de la structure de connexion ou des structures de connexion optimisée(s).

12. Système selon la revendication 10 ou 11,
**caractérisé en ce que**
le ou chaque commutateur téléphonique sélectionné (VST1, VST2, VST3) possède une interface pour la connexion au ou à chaque serveur de réseau de données (SR1, SR2, SR3) dans le réseau IP, qui est conçue pour contrôler l'établissement de la connexion par le biais du/des serveur(s) de réseau de données connecté(s) (SR1, SR2, SR3).

13. Système selon l'une quelconque des revendications 10 à 12,
**caractérisé en ce que**
le(s) serveur(s) de réseau de données (SR1, SR2, SR3) est ou sont connecté(s) aux terminaux d'agent (1, 2, 3) d'un centre d'appels par le biais du réseau IP.

14. Système selon l'une quelconque des revendications 10 à 12,
**caractérisé en ce que**,
dans le réseau IP, sont prévues une base de données de routage centralisée et, si souhaité, une mémoire d'informations de débit centralisée, qui sont accessibles par plusieurs ordinateurs de commutation ou serveurs de réseau de données (SR1, SR2, SR3).
